# EUROPEAN PATENT APPLICATION

(11) **EP 4 851 493 A1**
(43) Date of publication of application: **09.12.2026**
(21) Application number: 24928469.6
(22) Date of filing: 07.03.2024
(51) Int. Cl.: F16H 37/02

(54) **CONTINUOUSLY VARIABLE TRANSMISSION**

(71) Applicant: Univance Corporation, Kosai-city, Shizuoka 431-0494 (JP)
(72) Inventor: YAMAUCHI Yoshihiro, Kosai-City, Shizuoka 431-0494 (JP)
(74) Representative: Prüfer & Partner mbB Patentanwälte · Rechtsanwälte
(86) International application number: PCT/JP2024/008769
(87) International publication number: WO 2025/186994

(57) **Abstract**

A continuously variable transmission capable of lubricating a gear transmission device without using traction oil is provided. A continuously variable transmission includes: a variator including an input disk having a curved raceway surface and configured to rotate integrally with an input shaft, an output disk having a raceway surface facing the raceway surface, and a roller pressed against the two raceway surfaces; an element to which torque of the output disk is inputted; a gear transmission device to which torque of the element is inputted; a first case in which the variator and the element are housed; and a second case in which the first case and the gear transmission device are housed.

## Description

### TECHNICAL FIELD

The present invention relates to a continuously variable transmission including a variator and a gear transmission device.

### BACKGROUND ART

Patent Document 1 discloses conventional art relating to a continuously variable transmission including: a variator including an input disk that has a curved raceway surface and rotates integrally with an input shaft, an output disk that has a curved raceway surface, and rollers that are pressed between the two raceway surfaces; and a gear transmission device to which the torque of the output disk is inputted. The variator creates an oil film between the rollers and the raceway surfaces using a fluid called traction oil, and transmits torque via the oil film.

### PRIOR ART DOCUMENT

### PATENT DOCUMENT

Patent Document 1: Japanese Patent Application Laid-Open (kokai) No. 2008-38902

### SUMMARY OF THE INVENTION

### PROBLEM TO BE SOLVED BY THE INVENTION

In the conventional art, since the variator and the gear transmission device are housed in one case, if the gear transmission device shares the traction oil contained in the case with the variator, a large amount of traction oil is required. Furthermore, when meshing gears of the gear transmission device transmit torque, an oil film of traction oil can be formed, which may increase loss due to frictional resistance.

The present invention has been made to solve this problem, and an object of the present invention is to provide a continuously variable transmission capable of lubricating a gear transmission device without using traction oil.

### MEANS FOR SOLVING THE PROBLEM

A first aspect for achieving this object includes: a variator including an input disk having a curved raceway surface and configured to rotate integrally with an input shaft, an output disk having a raceway surface facing the raceway surface, and a roller pressed against the two raceway surfaces; an element to which torque of the output disk is inputted; a gear transmission device to which torque of the element is inputted; a first case in which the variator and the element are housed; and a second case in which the first case and the gear transmission device are housed.

In a second aspect based on the first aspect, the first case is fixed to the second case.

A third aspect based on the first or second aspect further includes: a first shaft configured to rotate integrally with the element; and a bearing supporting the first shaft, wherein the bearing is fixed to the first case.

In a fourth aspect based on any of the first to third aspects, the gear transmission device includes a planetary gear transmission, and the planetary gear transmission is disposed on a second shaft disposed parallel to the first shaft, and the torque of the element is inputted thereto.

A fifth aspect based on the fourth aspect further includes a clutch disposed on the second shaft and configured to restrict relative rotation between a moving element of the planetary gear transmission and the second shaft, wherein the clutch is housed in the second case.

### ADVANTAGEOUS EFFECTS OF THE INVENTION

In the continuously variable transmission of the present invention, the element to which the torque of the output disk of the variator is inputted and the variator are housed in the first case, and the first case and the gear transmission device are housed in the second case. Traction oil can be contained in the first case, and a fluid suitable for lubricating the gear transmission device can be contained in the second case. Therefore, the gear transmission device can be lubricated without using traction oil.

### BRIEF DESCRIPTION OF THE DRAWINGS

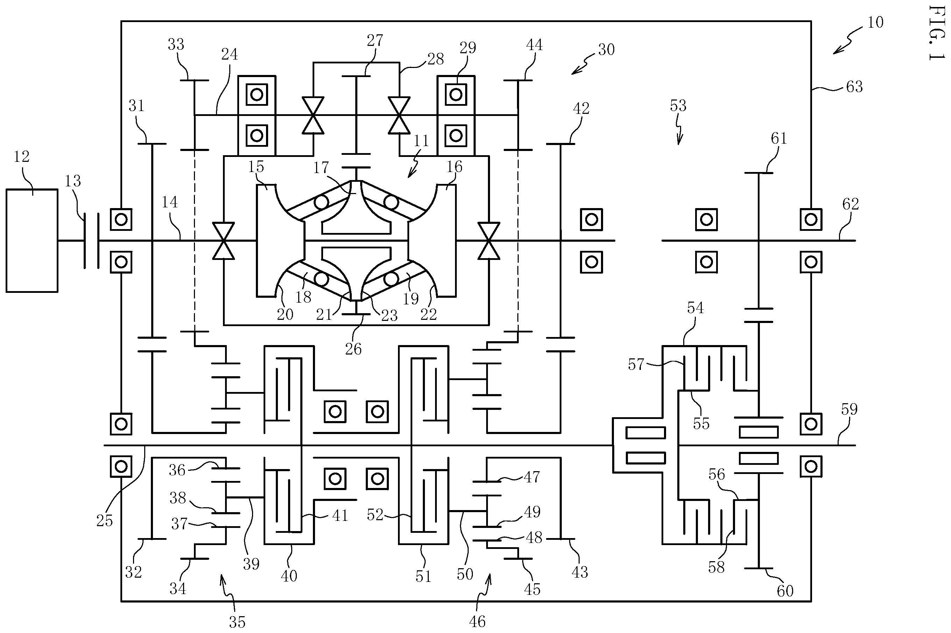

[FIG. 1] Skeleton diagram of a continuously variable transmission according to one embodiment.

### MODES FOR CARRYING OUT THE INVENTION

Hereinafter, a preferred embodiment of the present invention will be described with reference to the accompanying drawing. FIG. 1 is a skeleton diagram of a continuously variable transmission 10 according to one embodiment. The continuously variable transmission 10 includes a toroidal continuously variable transmission (variator) 11 and a gear transmission device 30.

The variator 11 is disposed on an input shaft 14 to which the torque of a crankshaft of an engine 12 is transmitted via a clutch 13. The variator 11 includes input disks 15 and 16 that rotate integrally with the input shaft 14, an output disk 17 that is located between the input disks 15 and 16 and rotatably disposed on the input shaft 14, and rollers 18 and 19 respectively disposed between the input disks 15 and 16 and the output disk 17. In the present embodiment, the variator 11 is a double cavity type half-toroidal transmission.

The variator 11 includes a pressing device (not shown). The pressing device includes, for example, a drum that rotates integrally with the input disk 15. The input disks 15 and 16 are mounted on the input shaft 14 so as to be movable in the axial direction. The drum generates a pressing force (hydraulic pressure) proportional to torque and elastically presses the input disk 15 toward the output disk 17. The input disk 16 receives a thrust load, and the output disk 17 transmits torque via the rollers 18 and 19, which are disposed between the input disks 15 and 16 and the output disk 17. The pressing device is not limited to a hydraulic mechanism that generates a pressing force proportional to torque. As a matter of course, for example, it is possible to employ a mechanical cam mechanism as the pressing device.

A curved raceway surface 20 provided on the input disk 15 faces a curved raceway surface 21 provided on the output disk 17. A curved raceway surface 22 provided on the input disk 16 faces a curved raceway surface 23 provided on the output disk 17. The rollers 18 and 19 are rotatably supported by carriages (not shown), respectively. The rollers 18 are pressed against the raceway surfaces 20 and 21 by a carriage having a caster angle, and the rollers 19 are pressed against the raceway surfaces 22 and 23 by a carriage having a caster angle.

The input shaft 14, a first shaft 24, and a second shaft 25 are arranged parallel to each other on different axes. A driving element 26 coupled to the output disk 17 transmits torque to a driven element 27 supported on the first shaft 24. In the present embodiment, the driving element 26 and the driven element 27 are gears, and the driving element 26 constantly meshes with the driven element 27, so that torque is transmitted by the meshing of the gears.

The driving element 26 and the driven element 27 are not limited to gears, and other means for transmitting torque may be employed. Examples of such other means for the driving element 26 and the driven element 27 include sprockets that transmit torque by means of a chain wound around the driving element 26 and the driven element 27, pulleys that transmit torque by means of a belt wound around the driving element 26 and the driven element 27, and rollers that transmit torque by means of a frictional force between the driving element 26 and the driven element 27.

The variator 11, the driving element 26, and the driven element 27 are housed in a first case 28. When a chain or belt is interposed between the driving element 26 and the driven element 27, the chain or belt is also housed in the first case 28. Traction oil is contained in the first case 28. The traction oil forms an oil film between the rollers 18 and the raceway surfaces 20 and 21 and between the rollers 19 and the raceway surfaces 22 and 23. The shear resistance of the oil film appears as a traction force that sequentially drives the input disks 15 and 16, the rollers 18 and 19, and the output disk 17, playing the role of transmitting torque.

The input shaft 14 and the first shaft 24 penetrate the first case 28 via oil seals. In the present embodiment, the driven element 27 is coupled to the first shaft 24, and the first shaft 24 rotates integrally with the driven element 27. The first shaft 24 is rotatably supported by bearings 29 fixed to the first case 28, and thus the bearings 29 can be arranged at positions suitable for the arrangement of the bearings 29. The bearings 29 are symmetrically arranged on both sides of the driven element 27.

The gear transmission device 30 is a device for amplifying the torque of the driven element 27. The gear transmission device 30 includes a first gear 31 coupled to the input shaft 14, a second gear 32 rotatably disposed on the second shaft 25 and meshing with the first gear 31, a third gear 33 coupled to the first shaft 24, a fourth gear 34 rotatably disposed on the second shaft 25 and meshing with the third gear 33, and a first planetary gear transmission 35 coupled to the second gear 32 and the fourth gear 34. The first planetary gear transmission 35 is disposed on the second shaft 25.

The gear transmission device 30 further includes a fifth gear 42 coupled to the input shaft 14, a sixth gear 43 rotatably disposed on the second shaft 25 and meshing with the fifth gear 42, a seventh gear 44 coupled to the first shaft 24, an eighth gear 45 rotatably disposed on the second shaft 25 and meshing with the seventh gear 44, and a second planetary gear transmission 46 coupled to the sixth gear 43 and the eighth gear 45. The second planetary gear transmission 46 is also disposed on the second shaft 25.

The fifth gear 42 is disposed on the input shaft 14 on a side opposite to the first gear 31 with the first case 28 interposed therebetween. The seventh gear 44 is disposed on the first shaft 24 on a side opposite to the third gear 33 with the first case 28 interposed therebetween. Since the third gear 33 is disposed between the first gear 31 and the first case 28, and the seventh gear 44 is disposed between the fifth gear 42 and the first case 28, the space occupied by the first gear 31, the third gear 33, the fifth gear 42, the seventh gear 44, and the first case 28 can be reduced.

The first planetary gear transmission 35 is a transmission for high speed, and the second planetary gear transmission 46 is a transmission for low speed. The first planetary gear transmission 35 and the second planetary gear transmission 46 have different gear ratios from each other. The first planetary gear transmission 35 includes a sun gear 36 coupled to the second gear 32, a ring gear 37 coupled to the fourth gear 34, a pinion 38 meshing with the sun gear 36 and the ring gear 37, and a carrier 39 rotatably supporting the pinion 38. A cylindrical third case 40 coupled to the carrier 39 is rotatably disposed on the second shaft 25. A clutch 41 disposed inside the third case 40 functions to transmit and interrupt torque from the third case 40 to the second shaft 25 between the third case 40 and the second shaft 25.

The second planetary gear transmission 46 includes a sun gear 47 coupled to the sixth gear 43, a ring gear 48 coupled to the eighth gear 45, a pinion 49 meshing with the sun gear 47 and the ring gear 48, and a carrier 50 rotatably supporting the pinion 49. A cylindrical third case 51 coupled to the carrier 50 is rotatably disposed on the second shaft 25. A clutch 52 disposed inside the third case 51 functions to transmit and interrupt torque from the third case 51 to the second shaft 25 between the third case 51 and the second shaft 25.

When the clutch 41 is engaged and the clutch 52 is disengaged, torque is transmitted from the third case 40 to the second shaft 25, and when the clutch 41 is disengaged and the clutch 52 is engaged, torque is transmitted from the third case 51 to the second shaft 25. In the present embodiment, the clutches 41 and 52 are friction clutches. Since the clutches 41 and 52 are disposed in a space on the second shaft 25 formed between the first planetary gear transmission 35 and the second planetary gear transmission 46, the overall length of the second shaft 25 can be shortened.

A reversing mechanism 53 is connected to the second shaft 25. The reversing mechanism 53 reverses the direction of rotation of the second shaft 25 and transmits the rotation of the second shaft 25. The reversing mechanism 53 includes a drum 54 coupled to the second shaft 25, a first hub 55 and a second hub 56 disposed inside the drum 54 and aligned with each other in the axial direction, a first clutch 57 disposed between the first hub 55 and the drum 54, and a second clutch 58 disposed between the second hub 56 and the drum 54.

A third shaft 59 disposed coaxially with the second shaft 25 is coupled to the first hub 55, and a ninth gear 60 rotatably disposed on the third shaft 59 is coupled to the second hub 56. A tenth gear 61 meshing with the ninth gear 60 is coupled to a fourth shaft 62. The first clutch 57 and the second clutch 58 are actuated by mechanical, electromagnetic, hydraulic, pneumatic, or other means. When the first clutch 57 is engaged and the second clutch 58 is disengaged, the torque of the second shaft 25 is transmitted to the third shaft 59, and when the first clutch 57 is disengaged and the second clutch 58 is engaged, the torque of the second shaft 25 is reversed and transmitted to the fourth shaft 62.

The first case 28, the gear transmission device 30, the clutches 41 and 52, and the reversing mechanism 53 are housed in a second case 63. The input shaft 14, the third shaft 59, and the fourth shaft 62 penetrate the second case 63 via oil seals. The first case 28 is fixed to the second case 63. Since the first case 28 can be prevented from colliding with the variator 11 and the gear transmission device 30, damage to the variator 11 and the gear transmission device 30 and the occurrence of abnormal noise can be reduced. Furthermore, the force based on the mechanical energy of the first case 28 generated by vibrations and the like can be prevented from being applied to the input shaft 14 which penetrates the first case 28.

A fluid (lubricating oil) suitable for lubricating the gear transmission device 30, the clutches 41 and 52, and the reversing mechanism 53 is contained in the second case 63. The lubricating oil is a fluid different from the traction oil contained in the first case 28, and an example of the lubricating oil is a fluid having a smaller µ (ratio T/N of tangential force T to pressing force N) than that of the traction oil. Since the traction oil is contained in the first case 28, and the lubricating oil is contained in the second case 63, the gear transmission device 30 can be lubricated without using traction oil. Compared to the case where the gear transmission device 30 shares traction oil with the variator 11, the amount of traction oil can be reduced, and furthermore, the frictional resistance of the gear transmission device 30 can be reduced by the lubricating oil.

When the continuously variable transmission 10 is installed in a vehicle (not shown) such as an automobile or an agricultural machine and the engine 12 drives wheels, the clutch 13 is engaged, furthermore, the clutch 52 and the first clutch 57 are engaged, and the clutch 41 and the second clutch 58 are disengaged, when the vehicle is caused to start moving (move forward). In the continuously variable transmission 10, the second planetary gear transmission 46 for low speed amplifies the torque outputted by the variator 11, and the torque is outputted from the third shaft 59. As a result, the vehicle can be caused to start moving, and continuous acceleration without torque interruption or shift shock can be achieved.

When the speed of the vehicle increases, the clutch 41 is engaged and the clutch 52 is disengaged. In the continuously variable transmission 10, the first planetary gear transmission 35 for high speed amplifies the torque outputted by the variator 11, and the torque is outputted from the third shaft 59. Since the continuously variable transmission 10 includes the first planetary gear transmission 35 and the second planetary gear transmission 46, transmission efficiency can be improved by switching from the second planetary gear transmission 46 to the first planetary gear transmission 35 in accordance with the speed of the vehicle.

Since the continuously variable transmission 10 distributes the torque of the input shaft 14 to the variator 11 and the first planetary gear transmission 35 during highspeed running of the vehicle, the torque transmitted by the variator 11 can be reduced compared to the case where the variator 11 transmits all the torque of the input shaft 14. Since energy loss generated in the variator 11 can be reduced, the variator 11 can be reduced in size and weight, and the transmission efficiency of the continuously variable transmission 10 can be improved.

When the vehicle is caused to start moving (move backward), the clutch 13 is engaged, furthermore, the clutch 52 and the second clutch 58 are engaged, and the clutch 41 and the first clutch 57 are disengaged. In the continuously variable transmission 10, the second planetary gear transmission 46 for low speed amplifies the torque outputted by the variator 11, and the torque is outputted from the fourth shaft 62. As a result, the vehicle can be caused to start moving and accelerate. When switching of the reversing mechanism 53 is performed while the vehicle is stopped, compared to the case where switching of the reversing mechanism 53 is performed while the vehicle is running, the mechanism can be simplified, thereby improving robustness.

Although the present invention has been described based on the embodiment, the present invention is not limited to the above-described embodiment at all. It can be easily understood that various improvements and modifications can be made without departing from the gist of the present invention.

In the embodiment, the case where the variator 11 is a double cavity type half-toroidal transmission has been described, but the present invention is not necessarily limited thereto. As a matter of course, it is possible to use a single cavity type variator or a full toroidal type variator as the variator 11.

In the embodiment, the case where the driven element 27 is coupled to the first shaft 24 and the driven element 27 rotates integrally with the first shaft 24 has been described, but the present invention is not necessarily limited thereto. As a matter of course, it is possible to rotatably dispose the driven element 27 on the first shaft 24, provide two elements coupled to the driven element 27, and rotatably dispose the elements on the first shaft 24. In this case, when torque is transmitted to the driven element 27, one of the elements provided on the first shaft 24 transmits torque to the fourth gear 34, and the other element transmits torque to the eighth gear 45.

In the embodiment, the case where the first planetary gear transmission 35 and the second planetary gear transmission 46 are planetary gear devices respectively including the sun gears 36 and 47, the ring gears 37 and 48, and the pinions 38 and 49 has been described, but the present invention is not necessarily limited thereto. As a matter of course, instead of each planetary gear device, it is possible to use a planetary roller device that transmits power by utilizing traction. By using a planetary roller device, it is possible to reduce vibration and noise as well as eliminate backlash.

In the embodiment, the case where the first planetary gear transmission 35 and the second planetary gear transmission 46 each include a single planetary gear train has been described, but the present invention is not necessarily limited thereto. As a matter of course, it is possible to employ a compound planetary gear train formed by combining a plurality of single planetary gear trains, in the first planetary gear transmission 35 or the second planetary gear transmission 46.

In the embodiment, the case where the sun gear 36 of the first planetary gear transmission 35 is coupled to the second gear 32, the ring gear 37 is coupled to the fourth gear 34, and the carrier 39 is coupled to the second shaft 25 has been described, but the present invention is not necessarily limited thereto. Also, the case where the sun gear 47 of the second planetary gear transmission 46 is coupled to the sixth gear 43, the ring gear 48 is coupled to the eighth gear 45, and the carrier 50 is coupled to the second shaft 25 has been described, but the present invention is not necessarily limited thereto. The present invention is not limited to the embodiment as long as a transmission for low speed and a transmission for high speed can be configured.

### DESCRIPTION OF REFERENCE NUMERALS

10 continuously variable transmission
11 variator
14 input shaft
15 input disk
17 output disk
18 roller
20,21 raceway surface
24 first shaft
25 second shaft
27 driven element (element)
28 first case
29 bearing
30 gear transmission device
35 first planetary gear transmission (planetary gear transmission)
39 carrier (moving element)
41 clutch
46 second planetary gear transmission (planetary gear transmission)
50 carrier (moving element)
52 clutch
63 second case

## Claims

1. A continuously variable transmission comprising:
a variator including
an input disk having a curved raceway surface and configured to rotate integrally with an input shaft,
an output disk having a raceway surface facing the raceway surface, and
a roller pressed against the two raceway surfaces;
an element to which torque of the output disk is inputted;
a gear transmission device to which torque of the element is inputted;
a first case in which the variator and the element are housed; and
a second case in which the first case and the gear transmission device are housed.

2. The continuously variable transmission according to claim 1, wherein the first case is fixed to the second case.

3. The continuously variable transmission according to claim 1 or 2, further comprising:
a first shaft configured to rotate integrally with the element; and
a bearing supporting the first shaft, wherein
the bearing is fixed to the first case.

4. The continuously variable transmission according to claim 3, wherein
the gear transmission device includes a planetary gear transmission, and
the planetary gear transmission is disposed on a second shaft disposed parallel to the first shaft, and the torque of the element is inputted thereto.

5. The continuously variable transmission according to claim 4, further comprising a clutch disposed on the second shaft and configured to restrict relative rotation between a moving element of the planetary gear transmission and the second shaft, wherein
the clutch is housed in the second case.
